# EUROPEAN PATENT APPLICATION

(11) **EP 1 774 854 A1**
(43) Date of publication of application: **18.04.2007**
(21) Application number: 05737162.7
(22) Date of filing: 27.04.2005
(51) Int. Cl.: A01N 63/00

(54) **MICROBIAL PESTICIDE INHIBITING THE OUTBREAK OF PLANT DISEASE DAMAGE**

(30) Priority: 28.04.2004 JP 2004133449
(71) Applicant: Japan Science and Technology Agency, Kawaguchi-shi, Saitama 332-0012 (JP)
(72) Inventor: KOIKE, Masanori, Hokkaido 0800857 (JP); YOSHIDA, Sanae, Ibaraki 3112444 (JP); ABE, Noriko, 0800048 (JP); ASANO, Kenji, Miyagi 9830023 (JP)
(74) Representative: Swinkels, Bart Willem
(86) International application number: PCT/JP2005/007981
(87) International publication number: WO 2005/104853

(57) **Abstract**

This invention is to provide microbial pesticides that can control plant disease damages by spraying the microbial pesticides, which contain filamentous fungus *verticillium lecanii* having suppressant effect on the growth of plant pathogen, onto plants such as fruits and vegetables, and to provide soil borne improvement agents which contain filamentous fungus *Verticillium lecanii,* and exert effect on improving the soil borne by applying to soil borne. By applying filamentous fungus *Verticillium lecanii,* preferably strains having an ability of colonization on plant surface, and/or strains having an ability of colonization on plant root surfaces and/or in rhizosphere to plants as microbial pesticides, the growth of plant pathogens as well as insect pests adhering to plants can be significantly suppressed. Furthermore, by giving them to soil borne, the growth of pathogens in plant rhizomes and the rhizosphere thereof can be suppressed, and pathogens are not developed in the soil borne even after the transplantation, therefore, the soil borne can be improved.

## Description

### Technical Field

The present invention relates to a microbial pesticide suppressing the occurrence of plant disease damages, specifically a microbial pesticide which contains an insect-parasitizing filamentous fungus *Verticillium lecanii,* and a microbial pesticide suppressing the growth of plant pathogens and improving the soil borne by spraying the microbial pesticide onto plants such as fruits and vegetables or by giving the microbial pesticide to soil borne for plant culture.

### Background Art

For control of noxious organisms in plants such as vegetables, fruits, rice plants and oats, and fruit trees, or for control of noxious organisms in soil borne which adheres plant rhizomes, there has been a progress in developing the controlling methods, presently controls using chemical insecticides and fungicides are the mainstream. However, agrochemicals using chemical agents have superior effectiveness, but at the same time some of them have toxicity to men and animals, or remain in natural environments and affect other ecosystems, moreover, leads to the emergence pests exhibiting the resistance after the prolonged use of agrochemicals, or create an environment in which even natural enemies inherently existed in nature are killed and noxious organisms emerge on the contrary. Thus, there remain some issues to be elucidated. In these situations, microbial pesticides are expected as a means to solve the issues.

As for microorganisms available as microbial pesticides, nonpathogenic *Fusarium* which activates the resistance retained originally in plants to control disease damage (e.g., see nonpatent document 1 and patent document 1), and *Trichoderma* showing antibiosis against pathogen (e.g., see nonpatent document 2) have been reported. Further, methods by using bacteria belonging to *Pseudomonas* for controlling plant disease damages such as bacterial wilt disease of solanaceous plant (e.g., see patent documents 2, 3 and 4), damping-off on rice seedling (e.g., see patent document 5), plant disease damages caused by plant pathogens belonging to *Botrytis* and *Penicillium* (e.g., see patent document 6), plant disease damage caused by Gram-positive bacteria (e.g., see patent document 7), and plant disease damage caused by fungi belonging to *Fusarium* (e.g., see patent document 8) are known. Furthermore, a microbial pesticide that contains *Pseudomonas* sp CGF7 having antibacterial activity for phytopathogenic filamentous bacterium (e.g., see patent document 9), or *Pseudomonas* sp CGF878, as an active constituent, which is a strain that can control disease damages by using bacteria belonging to *Pseudomonas* (e.g., see patent document 10), a method for controlling neck rot caused by pathogen *Pseudomonas cichorii,* which treats plants (e.g., lettuce) with bacterium *Pseudomonas fluorescens* (e.g., see patent document 11), and a method for cultivating solanaceous plants, which contains a step to inoculate bacterium *Pseudomonas alcaligenes* to solanaceous plants (e.g., see patent document 12) are known.

Further, a microbial pesticide, which has a bacterium belonging to any one of the *Pseudomonas, Bacillus* and *Enterobacter,* as a bacterium having antagonistic action against bacterial disease damage particularly occurring during raising of seedling for gramineae plant (e.g., see patent document 13), is known. Furthermore, it has been reported that fungi belonging to *Coniothyrium* and *Sporidesmium* show effects on crown rot, and fungi belonging to *Penicillium* have control effects on *Verticillium* disease (e.g., see nonpatent document 3). Use of isolates belonging to *Trichoderma* for controlling southern blight disease, and isolates belonging to *Trichoderma* and *Gliocladium* for controlling damping-off and spot blotch, have been reported (e.g., see nonpatent document 4). *Agrobacterium radiobacter* agent (Bacte-Rose) that is a bactericide consisting of probiotic culture of antagonistic microorganism, *Agrobacterium radiobacter* isolate 84 for *Rhizobium radiobacter* has effects on chrysanthemum and roses by giving it on their roots, and nonpathogenic *Erwinia carotovora* agent (Botokiller) mutated wild bacterial soft rot which is a microbial pesticide showing effects on control of Chinese cabbage soft rot, are registered already. *Bacilus subtilis* agent (Biokeeper) also registered is known to show preventive effects on gray mold fungi (e.g., see nonpatent document 5).

In regards to soil borne disease damages, traditionally disinfecting soil borne by using chloropicrin (methyl bromide) and the like for soil borne pathogen of vegetable, and using microorganism belonging to *Trichoderma* which is accommodated in a container made by materials having a disintegrative ability of soil borne as a control agent of soil borne disease damages (e.g., see patent document 14) are known. Further, for culturing plants, a method for controlling soil borne disease damage of plants by giving fungi belonging to *Gliocladium* and *VA mycorrhizal* fungi onto the plants and/or cultivation soil borne, colonizing the fungi belonging to *Gliocladium* in rhizosphere of plants, and making the *VA mycorrhizal* fungi to live with the plants (e.g., see patent document 15), is known.

On the other hand, disinfestant agents for plant (microbial pesticide) disinfesting plant insect pests by using entomopathogenic filamentous fungi are already registered and placed in the market. One of them is a microbial pesticide using *verticillium lecanii* and is sold under the trade name of "Vertalec" or "Mycotal". Filamentous fungus *Verticillium lecanii* was found initially as a parasite of scale insect, and then isolated from various insects such as aphids, whiteflies and thrips, and mites. Further, parasitizing cyst nematodes, root-knot nematodes, rust fungi of plant pathogens, powdery mildew fungi and the like, and showing antagonistic action are known (e.g., see nonpatent document 6). Microbial pesticides using *Verticillium lecanii* is effective for aphids (Hemiptera) and whiteflies (Hemiptera), and thrips (Thysanoptera), spider mites and the like, and is especially expected to be used in protected horticulture wherein progress of drug resistance in various insect pests are grown into a serious problem.

Microbial pesticides using *Verticillium lecanii* is formulated in a form of such as water-dispersible powder, and is dissolved in water and sprayed when they are used. In formulations, spores of *Verticillium lecanii* are contained. When the formulations are sprayed to contact a insect pest, the spores germinate to parasitize the insect pest and then hyphae are grown in the body of the insect pest, and filled to kill the insect pest. Traditional strains of *Verticillium lecanii* lose the parasitic ability when microorganism agent does not contact directly with the body surface of insect pests, because of the lower ability of colonization on the plant surface such as leaf surface, therefore when spraying the microorganism agent, the spray solution was required to be sprayed carefully to give directly onto the body surface of insect pest. In addition, since spraying directly onto insect pests was required whenever they emerged, it was needed to spray microorganism agent many times in accordance with the time and even the place of emergence of insect pest. Therefore, as a result of keen investigation of strains of filamentous fungus *verticillium lecanii* having the ability of colonization on the plant surface such as leaf surface by the present inventors, it was succeeded to isolate strains from the natural world, which have high ability of colonization on plant surface and are comparable to traditional strains of *Verticillium lecanii* for the pathogenic ability against insect pests. More specifically, the present inventors have proposed microbial pesticides that contained *Verticillium lecanii* strains such as newly isolated *Verticillium lecanii* A-2 (MAFF238426), *Verticillium lecanii* B-2 (MAFF238429) and *Verticillium lecanii* c-1 (MAFF238430), which have an ability of colonization on plant surface, as parasites for insect pests (e.g., see patent document 16).

Patent document 1: Japanese Patent Publication No. H7-096485
Patent document 2: Japanese Laid-Open Patent Application No. H6-9325
Patent document 3: Japanese Laid-Open Patent Application No. H6-86668
Patent document 4: Japanese Patent Publication No. H6-17291
Patent document 5: Japanese Laid-Open Patent Application No. H4-104783
Patent document 6: Japanese Laid-Open Patent Application No. H4-77405
Patent document 7: Japanese Laid-Open Patent Application No. H5-310521
Patent document 8: Japanese Laid-Open Patent Application No. H6-6523
Patent document 9: Japanese Laid-Open Patent Application No. H09-255513
Patent document 10: Japanese Laid-Open Patent Application No. H11-187866
Patent document 11: Japanese Laid-Open Patent Application No. 2001-247423
Patent document 12: Japanese Laid-Open Patent Application No. 2002-233246
Patent document 13: Domestic re-Publication of PCT international publication No. 99/016859
Patent document 14: Japanese Laid-Open Patent Application No. H06-024925
Patent document 15: Japanese Laid-Open Patent Application No. H08-225419
Patent document 16: Japanese Laid-Open Patent Application No. 2003-335612
Nonpatent document 1: Baker, Hanchey, Dottara; Phytopathology, 1978
Nonpatent document 2: Ministry of Agriculture, Forestry and Fisheries of Japan Registered No. 7023
Nonpatent document 3: Biopesticide, Utilization manual for developing growth control agent, LIC
Nonpatent document 4: Plant Pathology, 38, 227, 1989
Nonpatent document 5: "Agrochemical handbook for 2001" P.352-353, the 11th edition issued on November 1st, 2001, Japan Plant Protection Association
Nonpatent document 6: "agriculture of this month " p. 72-77, the 9 issue, 2001

### Disclosure of the Invention

### Object to be solved by the present invention

Objects of the present invention is to provide microbial pesticides that can control plant disease damages by spraying the microbial pesticides which contain filamentous fungus *Verticillium lecanii* having effect on suppressing the growth of plant pathogens, onto plants such as fruits and vegetables, and to provide microbial pesticides for suppressing soil borne disease damages which contain filamentous fungus *verticillium lecanii* as soil borne improvement agents effective for improving the soil borne by applying them in place of traditional disinfectants such as chloropicrin (methyl bromide) to soil borne.

### Means to solve the object

As described above, the present inventors previously reported that filamentous fungus *Verticillium lecanii* having an ability of colonization on plant surface was highly effective for suppressing insect pests by spraying them onto plants as a microbial pesticide. Further, the present inventors studied hard to use the utility of the filamentous fungus, and found the effect on significantly suppressing the growth of plant pathogens as well as insect pests adhering to plants. Furthermore, the present inventors found that giving filamentous fungus *Verticillium lecanii* to soil borne is effective for suppressing the growth of pathogen adhering to plant rhizomes, the pathogen does not emerge from soil borne even after the transplantation, and the soil borne can be improved, and thus completed the present invention.

That is, the present invention relates to (1) a microbial pesticide which contains a strain of *Verticillium lecanii* having a growth suppressant action on a plant pathogen as an active ingredient; (2) the microbial pesticide according to "1", wherein a strain of *Verticillium lecanii* is a strain having a colonization ability on plant surface, and/or a strain having a colonization ability on plant root surfaces and/or in rhizosphereand; (3) the microbial pesticide according to "2", wherein a strain having a colonization ability on plant surface, and /or a strain having a colonization ability on plant root surfaces and /or in rhizosphere is *verticillium lecanii* A-2 (MAFF238426); (4) the microbial pesticide according to "2", wherein a strain having a colonization ability on plant surface, and /or a strain having a colonization ability on plant root surfaces and /or in rhizosphere is *verticillium lecanii* B-2 (MAFF238429); (5) the microbial pesticide according to "2", wherein a strain having a colonization ability on plant surface, and /or a strain having a colonization ability on plant root surfaces and /or in rhizosphere is *Verticillium lecanii* C-1 (MAFF238430) ; (6) the microbial pesticide according to any one of "1" to "5", wherein a plant pathogen is a *powdery mildew fungus* of vegetables and fruits, a *gray mold fungus,* a *Fusarium oxysporum* or a *Verticillium dahliae;* (7) the microbial pesticide according to "4" or "6", which contains *Verticillium lecanii* B-2 (MAFF238429) having a growth suppressant action on a *Botrytis cinerea* causing strawberry Gray Mold as an active ingredient; and (8) a method for suppressing a plant disease damage wherein the microbial pesticide according to any one of "1" to "7" is sprayed onto leaf surfaces of a plant.

The present invention also relates to (9) a microbial pesticide for suppressing a soil borne disease damage, which contains a strain of *Verticillium lecanii* having a growth suppressant action on a soil borne disease damage pathogen as an active ingredient; (10) the microbial pesticide according to "9", wherein a strain of *Verticillium lecanii* is a strain having a colonization ability on plant surface, and /or a strain having a colonization ability on plant root surfaces and /or in rhizosphere; (11) the microbial pesticide for suppressing a soil borne disease damage according to "10", wherein a strain having a colonization ability on plant surface, and /or a strain having a colonization ability on plant root surfaces and /or in rhizosphere is *Verticillium lecanii* A-2 (MAFF238426); (12) the microbial pesticide for suppressing a soil borne disease damage according to "10", wherein a strain having a colonization ability on plant surface, and /or a strain having a colonization ability on plant root surfaces and /or in rhizosphere is *Verticillium lecanii* B-2 (MAFF238429); (13) the microbial pesticide for suppressing a soil borne disease damage according to "10", wherein a strain having a colonization ability on plant surface, and /or a strain having a colonization ability on a plant root surfaces and /or in rhizosphere is *verticillium lecanii* C-1 (MAFF238430); (14) the microbial pesticide for suppressing a soil borne disease damage according to any one of "9" to "13", wherein the soil borne disease damage pathogen is a *Fusarium oxysporum* or a *Verticillium dahliae;* (15) the microbial pesticide for suppressing a soil borne disease damage according to "11" or "14", which contains *Verticillium lecanii* A-2 (MAFF238426) suppressing a soil borne disease damage caused by *Fusarium oxysporum* f. sp. *melonis* as an active ingredient; (16) the microbial pesticide for suppressing a soil borne disease damage according to "13" or "14", which contains *Verticillium lecanii* C-1 (MAFF238430) suppressing a soil borne disease damage caused by *Verticillium dahliae* in tomato as an active ingredient; and (17) a method for suppressing a soil borne disease damage wherein the microbial pesticide for suppressing a soil borne disease damage according to any one of "9" to "16" is given to the vicinity of plant root.

The present invention further relates to (18) a soil borne improvement agent which contains the microbial pesticide for suppressing a soil borne disease damage according to any one of "9" to "16" as a major ingredient; and (19) a method for improving soil borne wherein the soil borne improvement agent according to "18" is given to soil borne.

### Brief Description of Drawings

[Fig. 1] It is a set of pictures showing the results of inhibition assays by dual culture of the 4 isolates of *Verticillium lecanii* with *Botryti cinerea* causing strawberry Gray Mold.
[Fig. 2] It is a graph showing the levels of invasion by *Botrytis cinerea* causing strawberry Gray Mold after spraying *Verticillium lecanii* in laboratory.
[Fig. 3] It is a graph showing the incidence rate of strawberry Gray Mold after inoculating *Verticillium lecanii* in agricultural field.
[Fig. 4] It is a graph showing the colonization of *Verticillium lecanii* of the present invention with cfu in soil borne infected by *Botrytis cinerea* causing strawberry Gray Mold.
[Fig. 5] It is a graph showing the colonization of *Verticillium lecanii* of the present invention with cfu on melon root surfaces.
[Fig. 6] It is a graph showing the colonization of *Verticillium lecanii* of the present invention with cfu in melon rhizosphere.
[Fig. 7] It is a graph showing the suppression action of *verticillium lecanii* of the present invention with disease severity index (DSI) for development of a disease caused by *Fusarium oxysporum* f. sp. *melonis.*
[Fig. 8] It is a graph showing the suppression action of *verticillium lecanii* of the present invention with plant fresh weights for development of a disease caused by *Fusarium oxysporum* f. sp. *melonis.*
[Fig. 9] It is a graph showing the colonization of *verticillium lecanii* of the present invention with cfu in soil borne infected by *verticillium dahliae* in tomato.
[Fig. 10] It is a graph showing the colonization of *Verticillium lecanii* of the present invention with cfu on tomato root surfaces.
[Fig. 11] It is a graph showing the colonization of *Verticillium lecanii* of the present invention with cfu in tomato rhizosphere.
[Fig. 12] It is a graph showing the suppression action of *verticillium lecanii* of the present invention with external symptoms incidence for development of *Verticillium* wilt on tomato.
[Fig. 13] It is a graph showing the suppression action of *verticillium lecanii* of the present invention with severity of internal symptoms for development of *verticillium* wilt on tomato.
[Fig. 14] It is a graph showing the suppression action of *verticillium lecanii* of the present invention with plant fresh weights for development of *verticillium* wilt on tomato.
[Fig. 15] It is a graph showing the suppression action of *verticillium lecanii* of the present invention with plant dry weights for development of *Verticillium* wilt on tomato.
[Fig. 16] It is a graph showing the suppression action of *Verticillium lecanii* of the present invention with symptoms index of the transition state of the symptom of 2 to 4 weeks after inoculating powdery mildew fungi for development of cucumber powdery mildew.
[Fig. 17] It is a set of pictures showing the disease states of the third leaves of the control and B-2 *Verticillium lecanii* (50 ml treated) at 3 weeks later, related to the suppression action of *Verticillium lecanii* of the present invention for development of cucumber powdery mildew.

### Best Mode of Carrying Out the Invention

As for a microbial pesticide of the present invention, it is not especially limited as long as the microbial pesticide contains strains of *Verticillium lecanii* having a growth suppressant action on plant pathogen as an active ingredient; as for a method for suppressing plant disease damage of the present invention, it is not especially limited as long as the method is for spraying the microbial pesticide of the present invention onto the plant leaf surfaces; further, as for a microbial pesticide for suppressing the soil borne disease damages of the present invention, it is not especially limited as long as the microbial pesticide contains strains of *Verticillium lecanii* having effects on suppressing growth of the soil borne disease damage pathogens as an active ingredient; furthermore, as for a method for suppressing soil borne disease damage of the present invention, it is not especially limited as long as the method is for giving the microbial pesticide for suppressing soil borne disease damage of the present invention to the vicinity of the plant roots. As for the above plant pathogens, powdery mildew fungi of vegetables and fruits such as cucumber powdery mildew fungi and melon powdery mildew fungi, gray mold fungi of vegetables and fruits such as *Botrytis* cinerea causing strawberry Gray Mold, and others such as scab pathogen, dropping disease fungi, crown rot fungi and southern blight fungi can be exemplified. Further, as for the above soil borne disease damage pathogens, in addition to *Fusarium oxysporum* of vegetables and fruits such as *Fusarium oxysporum* f. sp. *melonis, verticillium dahliae* of vegetables and fruits such as *verticillium dahliae* in tomato, and others such as soft rot, neck rot, bacterial wilt disease, clubroot, disease, damping-off, violet root rot, white root rot, wilt, disease caused by *Rhizobium radiobacter,* common scab and the like can be exemplified.

As for the above strains of *verticillium lecanii,* A-1, A-2 (MAFF238426), B-1, B-2 (MAFF238429), C-1 (MAFF238430), C-2, ATCC22611, ATCC22612, ATCC58907, ATCC58908, ATCC58909, MAFF235690, MAFF235693, MAFF235694, MAFF235696, MAFF235699, MAFF235701 and the like can be exemplified. Among these strains of *verticillium lecanii,* strains having the ability of colonization on the plant surfaces such as A-1, A-2 (MAFF238426), B-1, B-2 (MAFF238429), C-1 (MAFF238430), C-2, and/or strains having the ability of colonization on plant root surfaces and/or in rhizosphere are preferred. The term "ability of colonization on the plant surface" here is the ability of colonizing strains for a certain period of time on plant surface when the strains are sprayed onto the plant surface. Further, the term "ability of colonization on plant root surfaces and/or in rhizosphere" here is the ability of colonizing strains for a certain period of time on plant root surfaces and/or in rhizosphere when the strains are given to the vicinity of the plant roots. These strains of *verticillium lecanii,* can be obtained from NIAS Genebank of National Institute of Agrobiological Sciences or American Type Culture Collection.

Among the above strains of *Verticillium lecanii,* B-2 (MAFF238429) is useful for *Botrytis cinerea* causing strawberry Gray Mold. Strawberry Gray Mold is a critical disease damage in strawberry, which is caused by pathogen, *Botrytis cinerea.* The disease was heretofore controlled by chemical pesticides, however, drug-resistant strains have emerged one after another in consequence of using the chemical pesticides and are presently considered to cause incurable disease damages.

Further, A-2 (MAFF238426) is useful for the soil borne disease damage caused by *Fusarium oxysporum* f. sp. *melonis.* A disease caused by *Fusarium oxysporum* f. sp. *melonis* is one of the diseases occurring frequently in greenhouse culture. The disease is caused by *Fusarium oxysporum f.sp.melonis (FOM).* The pathogen is inhabited in soil borne, for example, even when the environment is severe for the pathogen to survive, the pathogen generates chlamydospores and remains there with a risk to develop the disease for 4 to 5 years until the environment becomes favorable. Although chemical pesticides or resistant varieties are used for prophylaxis of this type of disease, there remains a problem that new pathogens resistant to those pesticides are generated soon.

In addition, c-1 (MAFF238430) is useful for soil borne disease damages caused by *Verticillium dahliae* in tomato. In the *Verticillium* wilt on tomato, part of lower leaves is wilted at first by soil borne contamination of filamentous fungi (*Verticillium dahliae* vdt-2) and the leaf margin is warped up. Then, the wilted part is etiolated and the symptom is spread to the leaf vein. When the symptom is progressed, the plant dies gradually from the lower leaves to higher leaves. Discolored vessels are observed, but not very remarkable. The disease is developed regardless of open culture or greenhouse culture, often at low temperatures and high humidity compared to the occurrence condition of a disease caused by *Fusarium oxysporum.* Although chemical pesticides or resistant varieties are used for measures of this type of disease at present, there remains a problem that new pathogens resistant to those pesticides are generated soon.

To formulate strains of *Verticillium lecanii* of the present invention as microbial pesticides or microbial pesticides for suppression of soil borne disease damage, methods for formulating general microbial pesticides can be used. For example, fungus bodies which contain spores and the like can be prepared as a powder formulation as a kind of a water-dispersible powder, which are formulated in an appropriate combination of a mineral carrier such as sellite or kaolin, a sugar such as starch, sucrose or glucose, a surfactant and the like, and dissolved in water and sprayed at the point of use. As for a surfactant, polyoxyethylene alkyl ether and ester, polyoxyethylene alkyl phenyl ether and ester, polyoxyethylene alkyl fatty acid ester, or polyoxyethylene sorbitan fatty acid ester is used to improve the dispersibility and spreadability of fungus body during spraying.

Microbial pesticides of the present invention can resolve the restriction that pesticides should be sprayed onto plants in accordance with the pathogen outbreaks as in the case of traditional strains, because they have superior colonization after the spraying onto plant bodies by using the strains of *Verticillium lecanii* that have colonization on plant surfaces such as leaves as the pathogen control of plant. Therefore, microbial pesticides of the present invention can be sprayed in advance before development of the disease damages with plant pathogens, thus it is not necessary to accurately specify spraying timing as in the case of conventional pesticides nor to spray every time the plant disease damage develops. Further, when microbial pesticides of the present invention are given to a pot in which a plant is cultured, they are colonized on root surfaces and in rhizosphere of the plant, and suppresses the development of soil borne disease (Fusarium disease, Verticillium disease) even after the transplantation into the soil contaminated by pathogen (*Fusarium, verticillium*) afterward. For this reason, comparing with the traditional ones, in addition to reducing the frequency of spraying, savings in cost and labor for control of plant disease damage can be practiced, and at the same time the disease damage of plant and soil borne can be controlled. In fact, traditional ones were needed to be sprayed every 2 weeks after development of disease damage by plant pathogen, but the microbial pesticides of the present invention do not need to be sprayed additionally during the period of plant culturing once the plant has been sprayed. Rhizosphere means a region around the root within nearly 3 to 5 mm from the root of plant. This region is a region where soil borne and plant come into contact, and has extremely affected by both the plant and the soil borne.

As for a soil borne improvement agent of the present invention, it is not especially limited as long as the agent contains a microbial pesticide of the present invention for suppressing soil borne disease damage as a major ingredient. Further, as for a method for improving soil borne of the present invention, it is not especially limited as long as the method is for giving a soil borne improvement agent of the present invention into soil borne. Soil borne improvement agents of the present invention can be used before or after the contamination caused by soil borne disease damage pathogens, and can control the soil borne disease damage caused by soil disease damage fungi.

The present invention will be explained in detail in the following by referring to the examples, but the technical scope of the present invention will not be limited to these. In Example 1, biocontrol of strawberry Gray Mold using *Verticillium lecanii;* in Example 2, biocontrol of the disease caused by *Fusarium oxysporum* f. sp. *melonis* using *Verticillium lecanii*; and in Example 3, biocontrol of the *Verticillium* wilt on tomato using *Verticillium lecanii,* will be explained respectively as follows.

### [Example 1]

### [Biocontrol of strawberry Gray Mold]

### (Test microorganism)

4 strains of *Verticillium lecanii, Verticillium lecanii* A-2 and *Verticillium lecanii* B-2 that are isolated by the present inventors, and Vertalec and Mycotal that are commercially available *Verticillium lecanii* microbial pesticide, were tested in the following experiment.

### (In vitro antagonistic action of Verticillium lecanii)

The *in vitro* antagonistic activity of *Verticillium lecanii* against *Botrytis cinerea* causing strawberry Gray Mold was examined in media. The 4 isolates of *Verticillium lecanii* were tested in dual culture with *Botrytis cinerea* causing strawberry Gray Mold. Agar discs of *Botrytis cinerea* causing strawberry Gray Mold were placed on one side of potato dextrose agar (PDA: SIGMA) plate and agar discs of *Verticillium lecanii* cultured on potato sucrose agar (PSA) were placed on the other side of the same plate. Inhibition zones (mm) were measured after culturing at 25°C for 5 days. The same experiment was replicated three times. Hyphal interaction between *verticillium lecanii* and *Botrytis cinerea* causing strawberry Gray Mold was observed under the OLYMPUS light microscope.

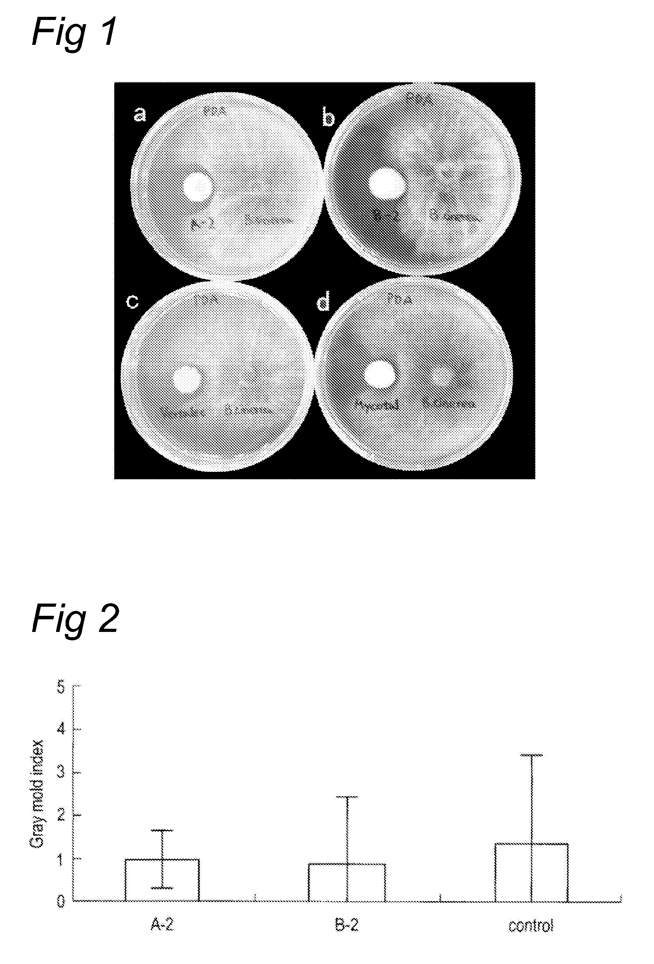

The result of *Botrytis cinerea* causing strawberry Gray Mold inhibition assays using *verticillium lecanii* on PDA showed that all isolates of *Verticillium lecanii* formed strong mean ingibition zones (Fig. 1). In Fig. 1, a, b, c and d show A-2, B-2, Vertalec and Mycotal, respectively. Inhibition zones were clearly discernible at 5 days later, and their volumes formed were reduced over a period of several weeks. Hyphal interaction between *verticillium lecanii* and *Botrytis cinerea* causing strawberry Gray Mold was not observed in dual cultures.

### (Control of Botrytis cinerea causing strawberry Gray Mold by antagonists in laboratory)

Healthy strawberry fruits were surface-sterilized in 5% antiformin for 5 minute and washed by distilled water. These strawberry fruits were sprayed with the spore suspensions of *Verticillium lecanii* A-2 and B-2 (1×10⁷ spores/ml), and of *Botrytis cinerea* causing strawberry Gray Mold (1×10⁶ spores/ml) as antagonists. 10 fruits were used per one treatment. A fruit sprayed with distilled water was used as a control. These suspensions and distilled water were added with Tween 80 as a surfactant. Treated fruits were kept in an incubator at 25°C. Four days after inoculation, the diseased area on each strawberry fruit was estimated from the images and scores for inoculated fruits were assigned according to the percentage of area covered by gray mold on a scale of 0 to 5. 0= gray mold area per fruit is 0%, 1=>0=<20%, 2=>20=<40%, 3=>40=<60%, 4=>60=<80%, 5=>80%.
The gray mold indexes were 0.9 to 1.0 when the fruits were treated with *Verticillium lecanii* (Fig. 2) . The results of all isolates did not differ significantly from the result of one using distilled water. The fruits treated with *verticillium lecanii* showed low gray mold indexes but they were covered with other fungi.

### (Control of naturally occurring gray mold disease in agricultural field)

Nursery plants of strawberry cultivar 'Eran' were planted on 23rd of May (2003) with 1 m distance between rows and 40 cm between the plants. Each experimental plot was comprised of 4 plants, two rows with two plants in each row. The suspension of *verticillium lecanii* was inoculated with 1 × 10⁷ spores/ml. Control plants were sprayed with tap water and pesticide plots were sprayed with a mixture of Daconeal (fungicide) and Ortran (insecticide) (Sumitomo Chemical Takeda Agro co., Ltd.; Tokyo, Japan). Surfactant (one drop of Tween 80 per 20ml) was added to the suspension at a rate of 20 ml per suspension litter. The suspension was applied in the evening of the following dates: 11^{th} of July, 25^{th} of July, 8^{th} of August and 22^{nd} of August. Ripe fruits were harvested mainly twice a week, sometimes three times, and counted the total number of fruits and infected fruits.

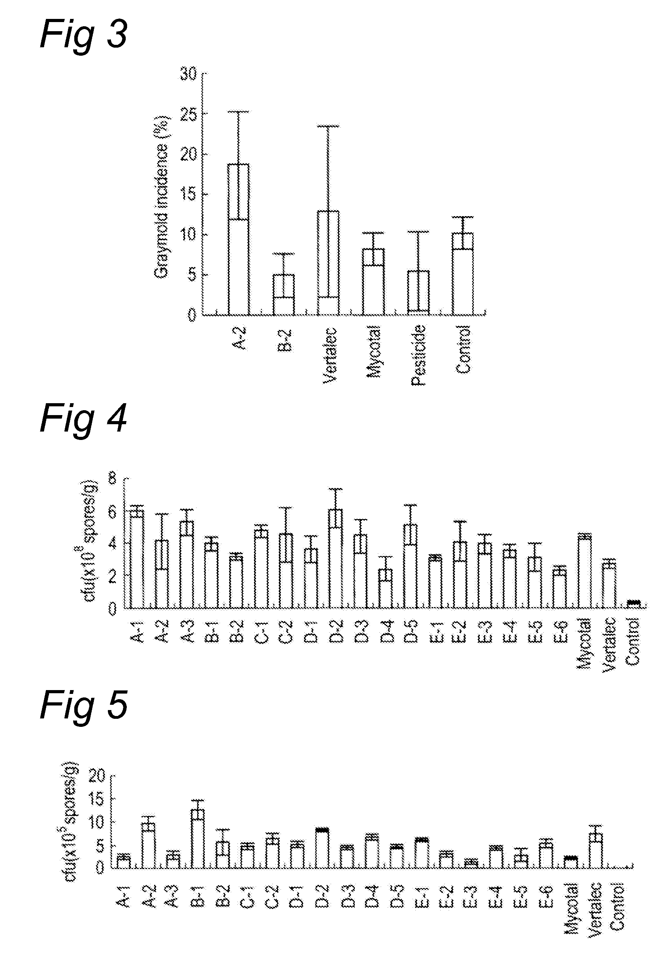

The results indicated that *Verticillium lecanii* B-2 had the best antagonistic activity among them (Fig. 3). B-2 suppressed the gray mold incidence rate until 5.0%, and showed stronger suppressant action than Vertalec or Mycotal. When the correlation between the average temperature and relative humidity at Obihiro and the average of gray mold incidence rate during the experiment were studied, it showed that the incidence rate of *Botrytis cinerea* causing strawberry Gray Mold correlated with the relative humidity.

### [Example 2]

### [Biocontrol of the disease caused by Fusarium oxysporum f. sp. melonis]

### (Test microorganism)

20 isolates of *verticillium lecanii,* which are listed in Table 1 included commercial preparations of Vertalec and Mycotal, were tested. The fungi were cultured in darkness at 25 ± 1°C for 2 weeks on potato sucrose chitin agar (PSCA: 200g potato, 20g sucrose, 10g chitin, 20g agar, per liter) plate, then these strains were grown in moist of gardening soil and wheat bran (4:1, w/w) for 2 weeks. On the other hand, *Fusarium oxysporum* f. sp. *melonis (FOM)* was isolated from a melon plant in Tokachi Agriculture Experiment Station. The pathogenic fungi were maintained and grown on potato dextrose agar (PDA) at 5 ± 1°C.

**[Table 1]**

| *V. lecanii* | Inhibition |
|---|---|
| A-1 | + |
| A-2 | +++ |
| A-3 | + |
| B-1 | ++ |
| B-2 | + |
| C-1 | ++ |
| C-2 | - |
| ATCC22611 | - |
| ATCC22612 | - |
| ATCC58907 | + |
| ATCC58908 | + |
| ATCC58909 | - |
| MAFF235690 | + |
| MAFF235693 | ++ |
| MAFF235694 | - |
| MAFF235696 | - |
| MAFF235699 | - |
| MAFF235701 | + |
| Mycotal | - |
| Vertalec | - |

### (Test plants)

A melon cultivar, "KING MELTY", which is susceptible to *Fusarium oxysporum* f. sp. *melonis (FOM),* was used in each experiment. Seeds were grown in petrel-dish in dark room for 2 days before transplanting into pots. The seeds in these pots were grown in climate-controlled glasshouse.

### (In vitro antagonistic action of verticillium lecanii)

The *in vitro* antagonistic activity of *verticillium lecanii* against *Fusarium oxysporum* f. sp. *melonis* was examined in media. The 20 isolates of *verticillium lecanii* were tested in dual cilture with *Fusarium oxysporum* f. sp. *melonis.* Agar discs of *Fusarium oxysporum* f. sp. *melonis* were placed on one side of potato dextrose agar (PDA: SIGMA) plate and agar discs of *verticillium lecanii* cultured on potato sucrose agar (PSA) were replaced on the other side of the same plate. Inhibition zones (mm) were measured after culturing at 25°C for 10 days. The same experiment was replicated three times. Hyphal interaction between *verticillium lecanii* and *Fusarium oxysporum* f. sp. *melonis* was observed under the OLYMPUS light microscope.

The result of *in vitro* antagonistic activity test of *verticillium lecanii* against *Fusarium oxysporum* f. sp. *melonis* is shown in Table 1. As shown in Table 1, A-2, B-1, C-1 and MAFF235693 of *Verticillium lecanii* showed strong inhibition zones.

### (Colony formation in soil borne, root surfaces and rhizosphere)

20 isolates of *Verticillium lecanii* were used in this experiment. 20 soil bornes treated by each of these 20 isolates were put into non-sterilized soil bornes (3%), respectively. The control has only the non-sterilized soil borne. Melon seeds were planted by 3 seeds in each pot (3 replication). 30 days later, their colonies were detected by using dilution plate methods. 2 out of 3 plant roots were taken from each pot. Then these roots were put in a test tube and shaken for 1 minute with 5 ml distilled water. 5g of rhizosphere soil bornes were put into Erlenmeuer flask which contained 45 ml distilled water. Roots and soil borne were diluted 4-fold and 3-fold, respectively. Rose Bengal agar medium which contained streptomycin sulphate was dropped with 1 ml of the suspension, and then incubated at 25°C for 3 days. After incubation, colonies of *Verticillium lecanii* were counted. Each experiment was performed 3 times.

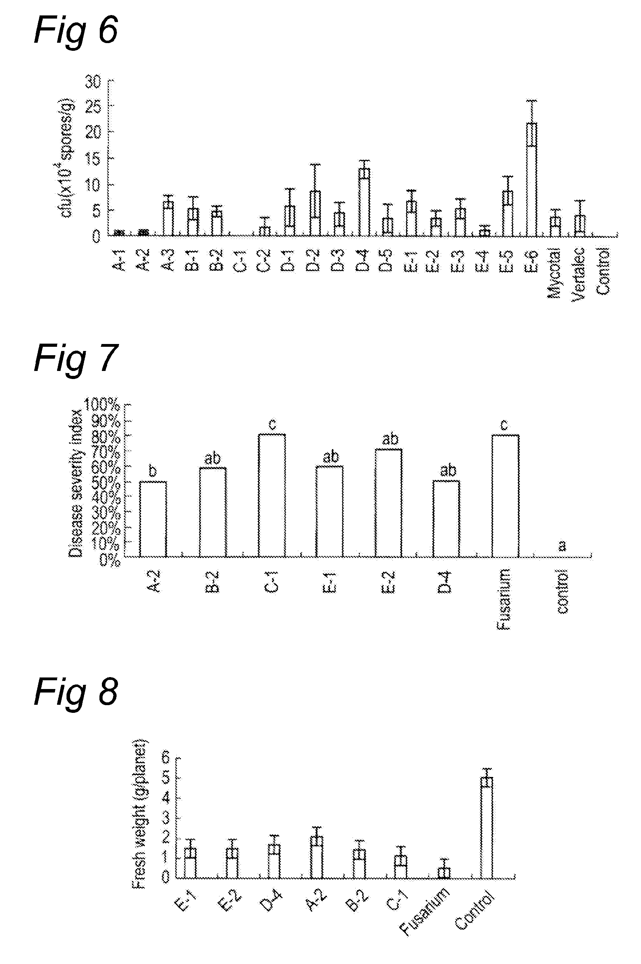

Colonies of *Verticillium lecanii* were detected in soil borne, root surfaces and rhizosphere. The numbers of colony forming unit (cfu) are shown in Figs. 4 to 6, respectively. In soil borne, all strains were detected and sufficiently showed high colonizing ability (Fig. 4). Among them, strains of ATCC22612, A-2 and A-3 showed more than 5 × 10⁸ cfu/g. In root surfaces, strains of A-2 and B-1 had high colonization ability and showed superior colonization (Fig. 5). Further, in rhizosphere, strains of MAFF235701, ATCC58908 and ATCC22612 showed greater colonization than any others and had superior colonization (Fig. 6).

### (Inoculation tests in greenhouse)

In this experiment, 6 strains of *Verticillium lecanii* (MAFF235690, MAFF235693, ATCC58908, A-2, B-2 and C-1) were used. Seeds were grown in a Petri dish, and were transplanted into each Jiffypot (SAKATA Seed Co., 6cm), which contains treated soil borne mixed with 3% of culture solution of *Verticillium lecanii* in a pot filled with approximately 16 g of nursery soil (TAKII SEED & CO., Ltd.). When the seedling had cotyledon, these pots were transferred onto plastic trays which contained 1% of pathogenic fungus, *FOM*-infected soil borne. After these plants were placed in greenhouse for 30 days, disease severity indexes (DSI) and plant fresh weights were evaluated. DSI (%) were calculated by the number of withered leaves/the total number of leaves × 100, each plant was graded on a scale of 0 to 100 based on the assessment of plant leaf appearance such that plants with a rating of 0 were healthy and those with a rating of 100 were dead.

From the previous experiments, 3 strains (MAFF235690, MAFF235693 andATCC58908) of *Verticillium lecanii* were selected for the reason of having significant antagonistic action. In addition, 3 strains (A-2, B-2 and C-1) which were evaluated by the present inventors in their studies and had an ability to colonize on leaf surfaces, were used in this experiment. These 6 strains showed superior biocontrol activity (Fig. 7) . At 16 days after transplanting into pots, pathogen controls and all strains except for the control were infected by *FOM.* The pathogen controls showed rapidly the damage from the 24th day and the DSI became finally 80%. A-2 was found to control the best among *Verticillium lecanii* strains. Not only A-2 but also B-2, ATCC235693 and MAFF58908 controlled sufficiently at their early stages. The fresh weight of plants from the pathogen control (Fig. 8) was 0.7g per plant. As compared with the above, the fresh weight of plants from the control was 4.5g per plant. The fresh weight of the plants treated with A-2 was 2.0g per plant.

### [Example 3]

### [Biocontrol of Verticillium wilt on tomato]

### (Test microorganism)

As in Example 2, 20 isolates of *Verticillium lecanii,* which are listed in Table 2 included commercial preparations of Vertalec and Mycotal, were tested.

**[Table 2]**

| Isolates | Inhibition |
|---|---|
| A-1 | + |
| A-2 | + |
| A-3 | + |
| B-1 | ++ |
| B-2 | ++ |
| C-1 | + |
| C-2 | + |
| Mycotal | + |
| Vertalec | +++ |
| ARRCC22611 | - |
| ATCC22612 | + |
| ATCC58907 | ++ |
| ATCC58908 | - |
| ATCC58909 | + |
| MAFF235690 | +++ |
| MAFF235693 | + |
| MAFF235694 | + |
| MAFF235696 | - |
| MAFF235699 | - |
| MAFF235701 | - |

### (In vitro antagonistic action of Verticillium lecanii)

The *in vitro* antagonistic activity of *Verticillium lecanii* against *Verticillium dahliae* in tomato was examined in media. The 20 isolates of *Verticillium lecanii* were tested in dual culture with *Verticillium dahliae* in tomato. Agar discs of *Verticillium dahliae* in tomato were placed on one side of potato dextrose agar (PDA: SIGMA) plate and agar discs of *Verticillium lecanii* cultured on potato sucrose agar (PSA) were replaced on the other side of the same plate. Inhibition zones (mm) were measured after culturing at 25 ± 0.1°C for 3 weeks. The same experiment was replicated three times. Hyphal interaction between *Verticillium lecanii* and *verticillium dahliae* in tomato was observed under the OLYMPUS light microscope.

The result of *in vitro* antagonistic activity test of *verticillium lecanii* against *verticillium dahliae* in tomato is shown in Table 2. By being restricted the pathogen growth in inhibition zones surrounding the colony of *Verticillium lecanii*, the suppression was identified distinctly. As shown in Table 2, strains of *Verticillium lecanii* except for ATCC22611, ATCC58908, MAFF235696, MAFF235699 and MAFF235701 showed antifungal activity against *Verticillium dahliae* in tomato (V. dahliae). Particularly, strains of Vertalec, B-1, B-2, MAFF235690 and ATCC58907 suppressed the growth of *Verticillium dahliae* in tomato significantly.

### (Colony formation in soil borne, root surfaces and rhizosphere)

20 isolates of *verticillium lecanii* were used in this experiment. 20 soil bornes treated by each of these 20 isolates were put into non-sterilized soil bornes (3%), respectively. The control has only the non-sterilized soil borne. Tomato seeds were planted by 3 seeds in each pot (3 replicaton) . After growing for 4 weeks at 25°C, their colonies were detected by using dilution plate methods. 2 out of 3 plant roots were taken from each pot. 5g of roots adhered these soil borne were rinsed with distilled water in a test tube and then stirred for 1 minute using super micro wave washing machine to release the fungal colonies on root surfaces into the water. In addition, the adhered soil bornes were homogenized using a blender. The stirred roots and the adhered soil bornes were serially diluted with sterile water. Rose Bengal agar medium which contained streptomycin sulphate was dropped with 1 ml of the diluted suspension, and then incubated at 25°C for 3 days. After incubation, colonies of *Verticillium lecanii* were counted. Each experiment was performed 3 times.

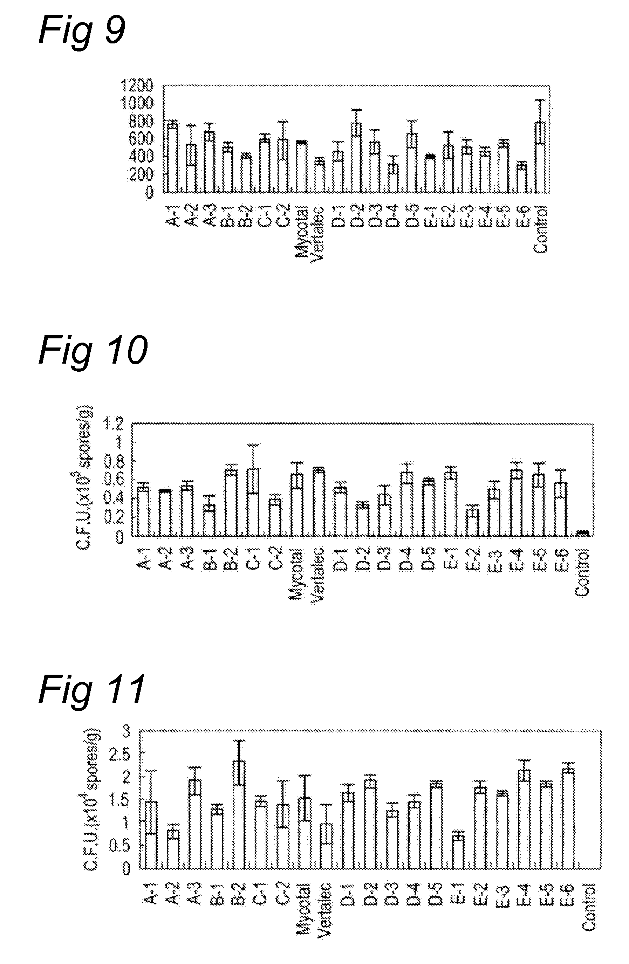

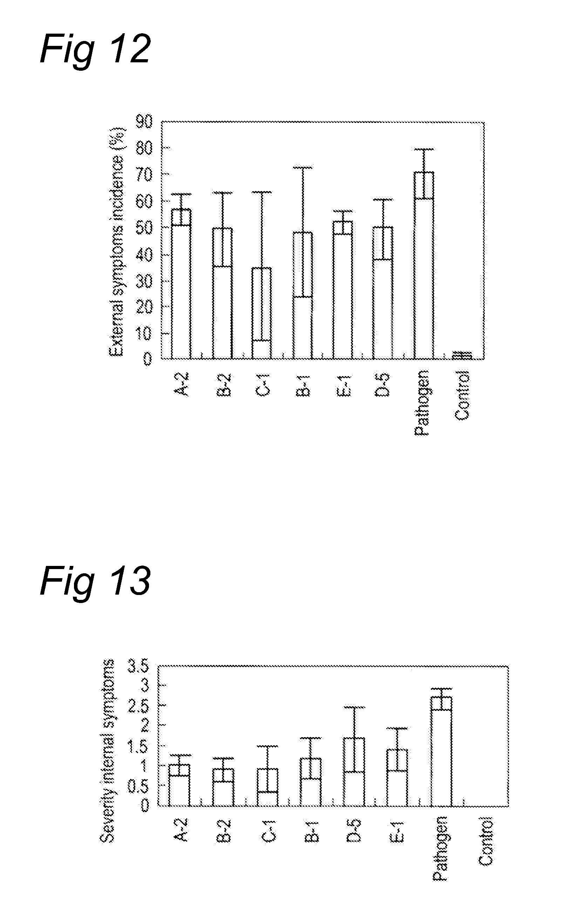

Colonies of *Verticillium lecanii* were detected in soil borne, root surfaces and rhizosphere. The numbers of colony forming unit (cfu) are shown in Figs. 9 to 11, respectively. In soil borne, all strains were detected and sufficiently showed high colonizing ability (Fig. 9). Among them, strains of ATCC22612, A-1, A-3, C-1 and ATCC589095 showed high colonization ability, but Vertalec, ATCC58908 and MAFF235701 did not show high colonization ability. In root surfaces, strains of B-2, A-3, ATCC22612, ATCC58909, MAFF235696, MAFF235699 and MAFF235701 had high colonization ability such as 1.83×10⁴ to 2.29×10⁴ spores/ml, and showed superior colonization (Fig. 10). In rhizosphere, strains of B-2, C-1, Vertalec, ATCC58908, MAFF235690 and MAFF235696 had high colonization ability such as 0.67×10⁵ to 0.73×10⁵ spores/ml, and showed superior colonization (Fig. 11).

### (Inoculation test in greenhouse)

In this experiment, 6 strains of *verticillium lecanii* (MAFF235690, ATCC58908, A-2, B-2, B-1 and C-1) were used. Seeds were grown in a Petri dish, and were transplanted into each Jiffypot (SAKATA Seed Co., 6cm), which contains treated soil borne mixed with culture solution of 3% *Verticillium lecanii* in a pot filled with approximately 16 g of nursery soil (TAKII SEED & CO., Ltd.) . When the seedling had cotyledon, these pots were transferred onto plastic trays which contained 200g of 5% pathogenic fungus, *Verticillium dahliae-infected* soil borne. These plants were kept in greenhouse at 20 to 25°C for 10 weeks. Seedlings treated (pathogen) and not treated (control) with *verticillium dahliae* in tomato were prepared as controls. At the end of the experiment, the stems and leaves were harvested and their fresh and dry weights were weighed. For each treatment, three replicates were made and each replicate was comprised of four plants. Stem symptoms were assessed by external symptoms incidence and severity of internal symptoms using a lot of withered stems. Since the controls of this experiment were not grown compared with other treated seedlings, 1 ml of *verticillium dahliae* suspension at 2 weeks after the inoculation and HYPONEX (1 ml/pot) at 8 weeks after the inoculation were injected. The above-mentioned external symptoms incidence was calculated by the number of wilted stems/the total number of stems × 100, and the internal symptom score was graded on a scale of 0 to 3 based on the discoloration degree of plant.

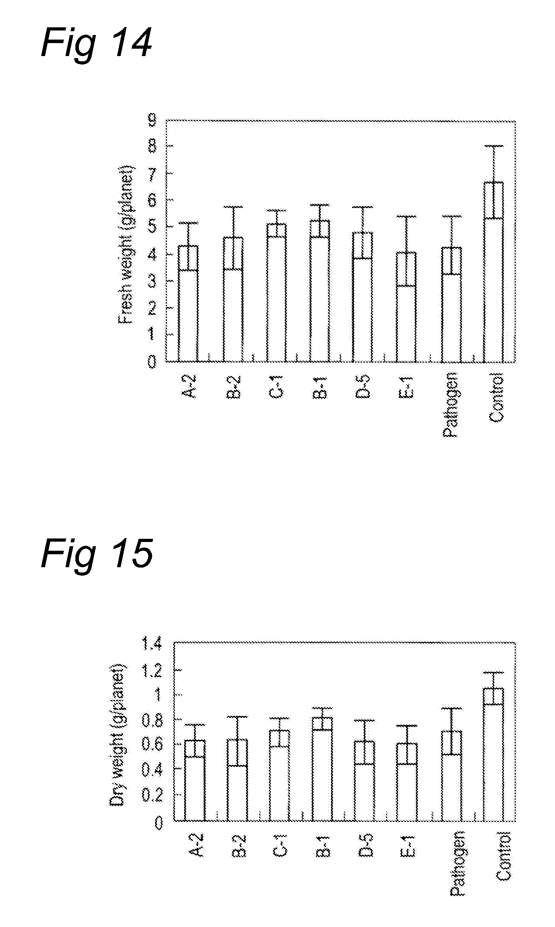

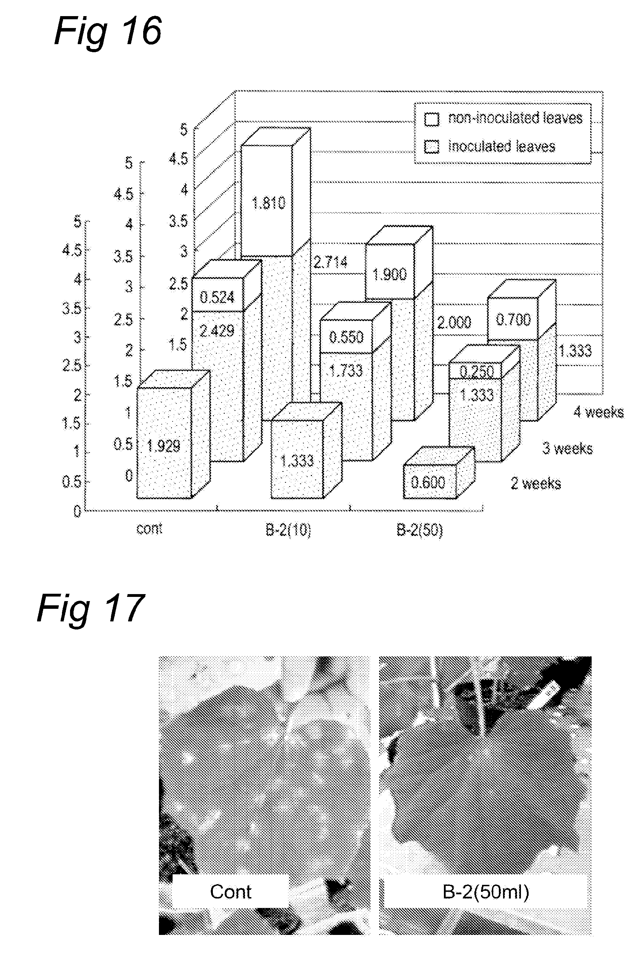

From the previous experiment, 2 strains (MAFF235690 and ATCC58908) of *Verticillium lecanii* were selected for the reason of having significant antagonistic action. In addition, 4 strains (A-2, B-2, B-1 and C-1) which were evaluated by the present inventors in their studies and had an ability to colonize on leaf surfaces, were used in this experiment. The results were shown in Figs. 12 (external symptoms incidence (%)) and 13 (severity of internal symptoms). These strains showed superior biocontrol activity (Figs. 12 and 13). After transplanting into pots, pathogen controls and all strains except for the control were infected by *Verticillium dahliae* in tomato. C-1 of *Verticillium lecanii* had the most effective suppressant action on wilt of *Verticillium* wilt on tomato. Strains of B-1 and MAFF235690 were effective against wilt of *Verticillium* wilt on tomato at the early stage. Strains of B-1 showed increase in the fresh weight (g/plant) and dry weight (g/plant) of tomato seedling compared to the pathogen controls (Figs. 14 and 15). The results of decrease in severity of internal symptoms by *Verticillium lecanii* strains were almost the same as those in external symptoms incidence. All strains showed significant decrease in the number of internal symptoms compared to pathogen controls. However, strains of B-2 and C-1 showed significant decrease in severity of internal symptoms as well as the control.

### [Example 4]

### (In vitro antagonistic action of Verticillium lecanii)

The *in vitro* antagonistic action of *Verticillium lecanii* was examined as in Examples 1 to 3. As a result, B-2 of *Verticillium lecanii* showed strong antagonistic action against cucumber powdery mildew and melon powdery mildew, and A-2 of *Verticillium lecanii* showed antagonistic action against cucumber powdery mildew.

### [Example 5]

### [Biocontrol of cucumber powdery mildew]

### (Test microorganism)

B-2 of *Verticillium lecanii* was used as a test microorganism.

### (Inoculation test in greenhouse)

In this experiment, cucumber plant with three true leaves grown in a pot was used as a test plant. Soil bornes around the roots of test plants were treated with spores of B-2 of *Verticillium lecanii* (spore concentration, 1 × 10⁷/ml) using 10 ml or 50 ml per strain. Untreated soil borne was used for a control. Spores of cucumber powdery mildew (104 conidia/ml) were dispersed on leaf surfaces of plant at 24 hours after the treatment in which the plant was treated with spores of B-2 of *Verticillium lecanii,* and symptom development of the plant (inoculated leaves) was observed at 2 to 4 weeks after the inoculation. Further, in the same way, spores of cucumber powdery mildew (104 conidia/ml) were also dispersed on leaf surfaces of a control plant to inoculate, and symptom development of the plant was observed at 2 to 4 weeks after the inoculation. Furthermore, the plant treated with spores of B-2 of *Verticillium lecanii* and the control plant were observed for the symptom development 2 to 4 weeks later without being inoculated with spores of cucumber powdery mildew fungi (non-inoculated leaves) (observation of the disease by airborne infection of powdery mildew fungi).

### (Symptom development)

The results of the above inoculation tests are shown in Figs. 16 and 17. In Fig. 16, symptom developments at 2 to 4 weeks after inoculating cucumber powdery mildew fungi are shown using symptom indexes in a graph. As shown in Fig. 16, there were significant differences between any one of them and the control. In Fig. 17, there were pictures showing the disease status on the third leaves in the control and the B-2 of *Verticillium lecanii* (50 ml treated) at 3 weeks after the inoculation.

### Industrial Applicability

A microbial pesticide that contains *Verticillium lecanii* of the present invention can suppress the growth of plant pathogens on the ground by giving it to the plant, and a microbial pesticide for suppressing soil borne disease damage that contains *Verticillium lecanii* of the present invention can suppress the development of soil borne diseases such as Fusarium disease and Verticillium disease by giving it to the vicinity of the plant roots, and can control disease damage in the environment surrounding where plant grows. damage according to any one of claims 9 to 16 is given to the vicinity of plant root.
18. A soil borne improvement agent which contains the microbial pesticide for suppressing a soil borne disease damage according to any one of claims 9 to 16 as a major ingredient.
19. A method for improving soil borne wherein the soil borne improvement agent according to claim 18 is given to soil borne.

## Claims

1. A microbial pesticide which contains a strain of *verticillium lecanii* having a growth suppressant action on a plant pathogen as an active ingredient.

2. The microbial pesticide according to claim 1, wherein a strain of *verticillium lecanii* is a strain having a colonization ability on plant surface, and/or a strain having a colonization ability on plant root surfaces and/or in rhizosphere.

3. The microbial pesticide according to claim 2, wherein a strain having a colonization ability on plant surface, and /or a strain having a colonization ability on plant root surfaces and /or in rhizosphere is *verticillium lecanii* A-2 (MAFF238426) .

4. The microbial pesticide according to claim 2, wherein a strain having a colonization ability on plant surface, and /or a strain having a colonization ability on plant root surfaces and /or in rhizosphere is *verticillium lecanii* B-2 (MAFF238429) .

5. The microbial pesticide according to claim 2, wherein a strain having a colonization ability on plant surface, and /or a strain having a colonization ability on plant root surfaces and /or in rhizosphere is *Verticillium lecanii* C-1 (MAFF238430).

6. The microbial pesticide according to any one of claims 1 to 5, wherein a plant pathogen is a *powdery mildew fungus* of vegetables and fruits, a *gray mold fungus,* a *Fusarium oxysporum* or a *verticillium dahliae.*

7. The microbial pesticide according to claim 4 or 6, which contains *Verticillium lecanii* B-2 (MAFF238429) having a growth suppressant action on a *Botrytis cinerea* causing strawberry Gray Mold as an active ingredient.

8. A method for suppressing a plant disease damage wherein the microbial pesticide according to any one of claims 1 to 7 is sprayed onto leaf surfaces of a plant.

9. A microbial pesticide for suppressing a soil borne disease damage, which contains a strain of *Verticillium lecanii* having a growth suppressant action on a soil borne disease damage pathogen as an active ingredient.

10. The microbial pesticide according to claim 9, wherein a strain of *verticillium lecanii* is a strain having a colonization ability on plant surface, and /or a strain having a colonization ability on plant root surfaces and /or in rhizosphere.

11. The microbial pesticide for suppressing a soil borne disease damage according to claim 10, wherein a strain having a colonization ability on plant surface, and /or a strain having a colonization ability on plant root surfaces and /or in rhizosphere is *Verticillium lecanii* A-2 (MAFF238426).

12. The microbial pesticide for suppressing a soil borne disease damage according to claim 10, wherein a strain having a colonization ability on plant surface, and /or a strain having a colonization ability on plant root surfaces and /or in rhizosphere is *Verticillium lecanii* B-2 (MAFF238429).

13. The microbial pesticide for suppressing a soil borne disease damage according to claim 10, wherein a strain having a colonization ability on plant surface, and /or a strain having a colonization ability on a plant root surfaces and /or in rhizosphere is *Verticillium lecanii* C-1 (MAFF238430).

14. The microbial pesticide for suppressing a soil borne disease damage according to any one of claims 9 to 13, wherein the soil borne disease damage pathogen is a *Fusarium oxysporum* or a *verticillium dahliae.*

15. The microbial pesticide for suppressing a soil borne disease damage according to claim 11 or 14, which contains *Verticillium lecanii* A-2 (MAFF238426) suppressing a soil borne disease damage caused by *Fusarium oxysporum* f. sp. *melonis* as an active ingredient.

16. The microbial pesticide for suppressing a soil borne disease damage according to claim 13 or 14, which contains *Verticillium lecanii* C-1 (MAFF238430) suppressing a soil borne disease damage caused by *Verticillium dahliae* in tomato as an active ingredient.

17. A method for suppressing a soil borne disease damage wherein the microbial pesticide for suppressing a soil borne disease damage according to any one of claims 9 to 16 is given to the vicinity of plant root.

18. A soil borne improvement agent which contains the microbial pesticide for suppressing a soil borne disease damage according to any one of claims 9 to 16 as a major ingredient.

19. A method for improving soil borne wherein the soil borne improvement agent according to claim 18 is given to soil borne.
